# EUROPÄISCHE PATENTSCHRIFT

(11) **EP 2 729 366 B1**
(45) Veröffentlichungstag und Bekanntmachung des Hinweises auf die Patenterteilung: **09.09.2015**
(21) Anmeldenummer: 12734893.6
(22) Anmeldetag: 04.07.2012
(51) Int. Cl.: B65B 1/38, G01F 11/18

(54) **VARIABLES DOSIERSYSTEM FÜR HETEROGENE, EMPFINDLICHE UND NICHT PUMPFÄHIGE LEBENSMITTEL MIT GERINGEM FLÜSSIGKEITSANTEIL**
VARIABLE METERING SYSTEM FOR HETEROGENEOUS, SENSITIVE AND NON-PUMPABLE FOODSTUFFS HAVING A LOW LIQUID PORTION
SYSTEME DE DOSAGE POUR DES PRODUITS ALIMENTAIRES HETEROGENES, DELICATS ET INAPTES AU POMPAGE, PRESENTANT UNE FAIBLE FRACTION DE LIQUIDE

(30) Priorität: 06.07.2011 DE 102011051603
(43) Veröffentlichungstag der Anmeldung: 14.05.2014
(73) Patentinhaber: Maschinenfabrik Leonhardt GmbH, 63303 Dreieich (DE)
(72) Erfinder: KERSCHBAUMER, Eric, 63303 Dreieich (DE)
(74) Vertreter: Meyer-Dulheuer, Karl-Hermann
(86) Internationale Anmeldenummer: PCT/EP2012/063056
(87) Internationale Veröffentlichungsnummer: WO 2013/004756

(56) Entgegenhaltungen:
- EP-A1- 2 066 382
- WO-A1-2008/034506
- US-A- 3 602 401

## Beschreibung

Die Erfindung betrifft ein variables Dosiersystem für heterogene, empfindliche und nicht pumpfähige Medien mit geringem Flüssigkeitsanteil, bei welchen es sich bevorzugt um Lebensmittel für den Fertiggebrauch handelt.

Aus dem Stand der Technik sind grundsätzlich Dosiermaschinen bekannt, die mithilfe von Schiebevorrichtungen eine entsprechende Dosierung von Schüttgut erreichen und dieses Schüttgut aufgrund der einwirkenden Schwerkraft in passende Verpackungseinheiten befördern.

Durch die Verwendung von solchen Schiebevorrichtungen (US 6 619 339 B2 und US 4 733 803 A) wird in der Regel loses bzw. körniges Schüttgut, wie beispielsweise Frühstückscerealien, portioniert und einer entsprechenden Weiterverarbeitung bzw. einer Verpackungseinheit zugeführt.

So ist beispielsweise aus der US 3 602 401 A eine Anlage zur volumetrischen Portionierung von kleinteiligen Lebensmitteln wie Erbsen, Bohnen, Mais oder Kartoffeln mittels einer teleskopierbaren Dosierkammer, welche zwischen einer Füllposition unter einem Einfülltrichter und einer Abgabeposition über einen Schlitten verschiebbar ist, bekannt.

Ferner beschreibt die WO 2008/034506 A1 ein Dosierkammersystem für vorzugsweise pulverförmige Füllgüter, welches mit Unter- und Überdruck in einer Dosierkammer, die bereichsweise gasdurchlässig ist, arbeitet. Die Dosierkammer wird über einen Kolben, der gleichzeitig den Kammerdruck steuert, zwischen einer Aufnahme- und einer Abgabeposition bewegt.

Es ergeben sich nun aus dem Stand der Technik einige Problemstellungen, die mit dem Stand der Technik nicht lösbar sind.

Durch die Verwendung von fest verbauten Dosierkammern geht eine Reinigung bzw. Wartung immer mit einem kompletten Zerlegen der Dosiermaschine einher. Aufgrund dieser fix verbauten Dosierkammern wird der Arbeitsprozess auf ein Dosierformat beschränkt, und dem lebensmittelverarbeitenden Betrieb ist es aufgrund der Ausführungsform der Maschine nur möglich, eine bestimmte, dem Dosierformat entsprechende Menge an Lebensmittel zu dosieren.

Des Weiteren ist aufgrund der kaskadierten vollpneumatischen Bauweise der dem Stand der Technik entsprechenden Systeme mit einem erheblichen Aufwand an pneumatischen Bauteilen zu rechnen, die trägen Regelstrecken entsprechen. Überdies stellt sich beim rein pneumatischen bzw. hydraulischen Betrieb immer die Frage der hygienischen Arbeitsbedingung und der Simplizität der Wartung und Reinigung.

Die Aufgabe der erfindungsgemäßen Vorrichtung ist nun, ein Dosiersystem zu etablieren, welches im lebensmitteltechnischen Bereich seine Anwendung findet und aus entsprechenden Materialien ausgeführt ist. Aufgrund der steigenden Anforderung im lebensmittetechnischen Bereich, umfasst die Aufgabe ebenfalls eine möglichst hohe Flexibilität des Systems sowohl hinsichtlich der Einzelvolumina als auch der Taktfrequenz, mit welcher die einzelnen Portionen schnell und sauber dosiert werden sollen. Die Stückzahl, die pro Zeiteinheit dosiert werden kann, sollte in der Regel dem jeweiligen Auftraggeber und dem jeweilig zu verarbeitenden Lebensmittel anpassbar sein, um einen maximalen Wirkungsgrad der Dosiermaschine gewährleisten zu können.

Es geht aus dem Stand der Technik hervor, dass die dem Stand der Technik zugehörigen Dosiersysteme nicht geeignet sind, die gewünschte Flexibilität bezüglich des Dosierformates aufzuweisen. Diese Tatsache manifestiert sich dadurch, dass die Möglichkeit eines Wechsels des Dosierformates nicht gegeben ist, bzw. aufgrund der Bauform des Systems kein merkliches Indiz hinsichtlich einer variablen Gestaltung der Dosiervolumina ersichtlich ist.

Aus der Bauform wird allerdings schnell ersichtlich, dass es sich beim Stand der Technik oft um kaskadierte vollpneumatische Dosiermaschinen handelt, welche alleine schon aufgrund der Ausführung mittels pneumatischen Kaskadenschaltungen nicht zu präferieren sind, da die Regelung von kaskadierten Pneumatikschaltungen unweigerlich zu komplizierten Systemaufbauten führt, welche in der Wartung vor allem kosten- und zeitintensiv sind, und sich eine eventuelle Fehlersuche ebenso als sehr schwierig gestaltet.

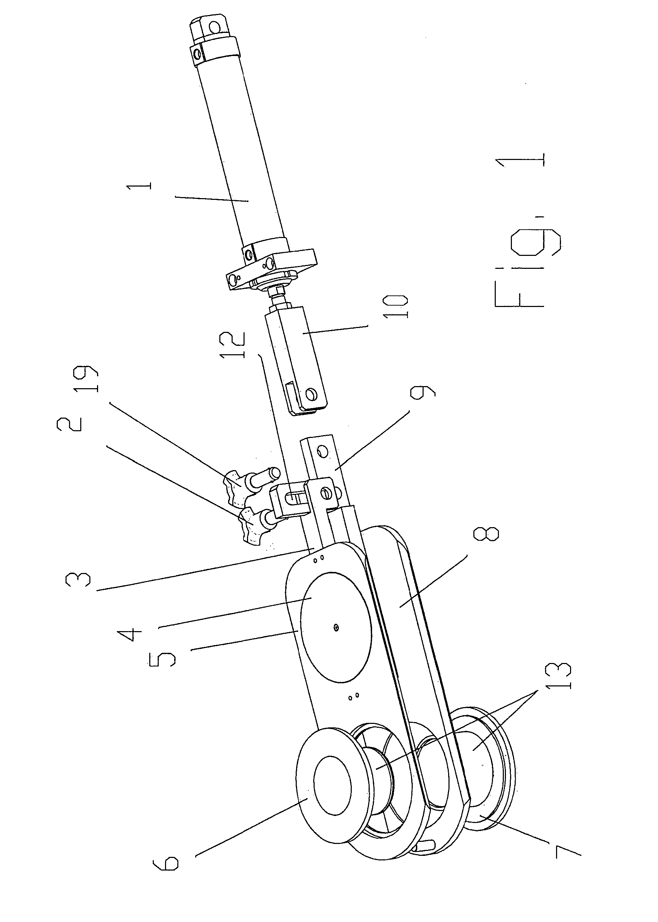

Die erfindungsgemäße Vorrichtung weist nun gerade diese Vorteile hinsichtlich der Ausgestaltung der Dosierformate auf. Das Ausführungsbeispiel ist in den Figuren 1 bis 3 dargestellt und zeigt:
Fig. 1) Eine perspektivische partielle Explosionszeichnung des kompletten Dosierformats inklusive Antriebszylinder **1**.
Fig. 2a) Längsschnitt durch das im System integrierte Dosierformat in Befüllstellung.
Fig. 2b) Längsschnitt durch das im System integrierte Dosierformat in Auswurfstellung.
Fig.3a) Schematischer Längsschnitt durch das System zum Variieren des Dosierformats in einer Ausgangsstellung.
Fig. 3b) Schematischer Längsschnitt durch das System zum Variieren des Dosierformats in einer Stellung, welche gegenüber Fig. 3a ein kleineres Dosierformat aufweist.

Die erfindungsgemäße Vorrichtung wird von einem Antriebszylinder **1** in linearer Richtung betrieben. Dieser Antriebszylinder **1** kann so ausgeführt sein, dass er aus einer röhrenförmigen Kammer bzw. einem Hohlzylinder und einem Kolben besteht und beispielsweise als elektromechanischer Hubzylinder, als pneumatischer Zylinder oder als Servozylinder ausgeführt ist. Jedenfalls beschreibt der Antriebszylinder **1** eine lineare Hubrichtung, welche aufgrund seiner Einbaulage in horizontaler Richtung geführt ist.

Der Antriebszylinder **1** ist so ausgeführt, dass am Ende des Hubkolbens ein Gabelkopf **10** montiert ist, welcher entsprechend dem Gabelkopfgestänge **9** so ausgeführt ist, dass bei einer formschlüssigen Verbindung des Gabelkopfs **10** mit dem Gabelkopfgestänge **9** diese mittels eines passenden Bolzens **19** fixiert werden kann.

Der untere Teil der Trägerplatte **8**, welche mit dieser angesprochenen formschlüssigen Verbindung mit dem Antriebszylinder **1** verbunden ist, weist ein vertikales Langloch **12** auf, in welchem die obere Führungsgabel **3** ebenfalls mittels eines Verbindungsbolzens **2** mit der unteren Trägerplatte **8** verbunden ist.

Dieses vertikale Langloch **12** ist für die Variation des Dosierformates wichtig, da aufgrund der technischen Ausführung zwar die untere und die obere Trägerplatte **5** miteinander verbunden sind, allerdings die Verbindung in vertikaler Richtung entlang dieses Langlochs **12** beweglich ist.

Die beiden Trägerplatten **5 und 8** beinhalten jeweils eine Ausnehmung, in denen die obere und die untere Dosierkammer **6 und 7** eingesetzt werden. Diese Dosierkammern **6 und 7** sind so ausgeführt, dass sie aus einem Material bestehen, das robust ist, den Hygienestandards von lebensmittelverarbeitenden Betrieben entspricht und einfach zu reinigen ist. Grundsätzlich sind die Dosierkammern **6 und 7** geometrisch so ausgeführt, dass sie sich beim Einlegen in die jeweilige Trägerplatte **5 oder 8** berühren und zu einem Teil überschneiden. Aus diesem Gesichtspunkt heraus wird der Innendurchmesser der oberen Dosierkammer **6** kleiner als der der unteren Dosierkammer **7** realisiert, so dass der obere Teil in den unteren Teil gesteckt werden kann und somit eine dichte, geschlossene Verbindung der beiden Dosierkammerteile **6 und 7** gegeben ist. Die beiden Dosierkammem **6 und 7** bilden zusammen einen Hohlzylinder, welcher durch den Innendurchmesser der kleineren Dosierkammer **7** charakterisiert ist und dieser Innendurchmesser auch Grundlage des Volumens ist, welches beim Betrieb der erfindungsgemäßen Vorrichtung maßgeblich eine Rolle spielt. Um einen möglichst breiten Bereich an Volumina mit entsprechenden Dosierkammergrößen abdecken zu können, ist vorzugsweise für den Betrieb des Dosiersystems je nach Anwendungsfall die passende Dosierkammergröße vorhanden. Die bevorzugten Dosierkammerdurchmesser sind 50, 65, 75, 100 und 140mm, welche auf das jeweilige Volumen der Dosierkammern rückschließen lassen.

Überdies sind die Dosierkammern **6 und 7** so ausgeführt, dass sie bei Reibung mit anderen Materialien (speziell mit rostfreiem Edelstahl) nicht spanen und die Temperaturentwicklung auch nach längerem Betrieb nicht über die tolerierte Verarbeitungstemperatur der zu verarbeitenden Lebensmittel steigt.

Die beiden Dosierkammern **6 und 7**, welche jeweils von unten und oben in die untere **8** bzw. obere Trägerplatte **5** eingesetzt werden, werden so miteinander verbunden, dass eine vertikal bewegliche, aber dennoch luft- und flüssigkeitsdichte Verbindung zwischen den beiden Dosierkammern **6 und 7** entsteht.

Dies kann über eine entsprechende Gummidichtung **13** zwischen den beiden Dosierkammern **6 und 7** erreicht werden. Zur Sicherstellung der Lage der beiden Dosierkammern **6 und 7** sind selbige so ausgeführt, dass sie in die Ausnehmung der jeweiligen Trägerplatte **5 oder 8** hineinpassen, und durch ihre spezielle Geometrie, welche eine Abstufung des Außenrings beinhaltet, sind beide Dosierkammern **6 und 7** so auf den Trägerplatten **5 und 8** angebracht, dass sie in ihrer Lage nicht verrutschen können und auch bei außerordentlich intensiven Einsatz ihre ursprüngliche Lage behalten.

Um unnötige Scher- und Spankräfte zwischen den Trägerplatten **5 und 8** und der Führung der Trägerplatten **5 und 8** zu vermeiden, wird in der jeweiligen Trägerplatte **5 und 8** eine Distanzschreibe eingesetzt, welche zum einen die Leichtgängigkeit der Hubbewegung unterstützen soll und zum anderen den direkten Kontakt zwischen zwei metallischen Oberflächen verhindert. Durch die typische Hubbewegung der Trägerplatten **5 und 8** könnte es zwischen den Trägerplatten **5 und 8** und deren Führung ohne diese Distanzscheiben **4** zu einer Spanbildung kommen, welche in lebensmittelverarbeitenden Betrieben tunlichst zu vermeiden ist, da sich diese auf die Qualität der Produkte auswirkt.

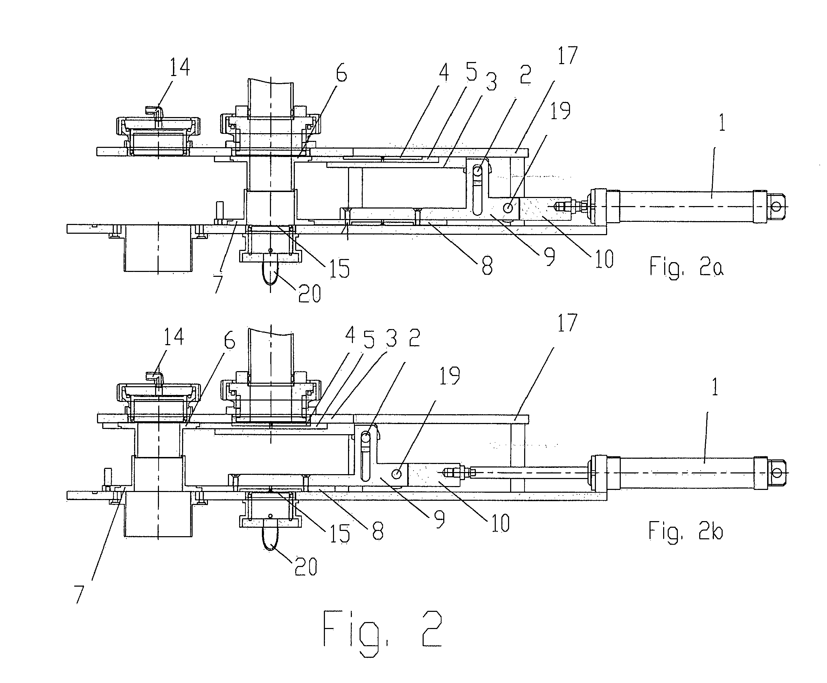

Das erfindungsgemäße Dosiersystem verfügt zudem über luftdichte Anschlüsse im Bereich der Beschickung 20 der Dosierkammer **6 und 7** und im Bereich des Dosiergutauswurfs **14.** Einer der Anschlüsse hat, wie in der Fig. 2a ersichtlich, den Zweck, durch ein entsprechendes Vakuum das Lebensmittel sauber in die Dosierkammern **6 und 7** zu befördern. In dieser Stellung werden grundsätzlich die Dosierkammern **6 und 7** mit dem jeweiligen Lebensmittel beschickt und die unterstützende Beschickung mittels Vakuum gewährt ein sauberes und schnelles Beschicken der Dosierkammern **6 und 7**. Durch die entsprechende Steuerung, welche vornehmlich durch eine speicherprogrammierbare Steuerung (SPS) stattfindet, wird das Dosierformat von oben beschickt (Fig. 2a). Durch den Anschluss, der sich unter den Dosierkammern **6 und 7** befindet, wird das Lebensmittel mit einem Vakuum beaufschlagt und so förmlich in die Dosierkammern **6 und 7** gesaugt. Durch die Abstimmung auf die jeweiligen Volumina ist es möglich, die Dosierkammern **6 und 7** in sehr kurzer Zeit mit den exakten Volumina zu beschicken. Durch die Verwendung eines stabilen engmaschigen Siebs **15** oder einer anderen luftdurchlässigen Ausgestaltungsform ist ebenfalls sichergestellt, dass das zu beschickende Lebensmittel in den Dosierkammern **6 und 7** bleibt und nicht durch das Vakuum weiter gesaugt wird.

Nachdem die Dosierkammern **6 und 7** in der Stellung, welche in Fig. 2a ersichtlich ist, beschickt wurde, wird der Antriebszylinder **1** so gesteuert, dass er sich von der Beschickungsposition mittels der Hubbewegung des Antriebszylinders **1** in die Auswurfposition bewegt wird (Fig. 2b). Durch den Luftdruck, welcher nun von oben auf das beschickte Lebensmittel wirkt, wird das Lebensmittel entsprechend der Gravitation nach unten ausgeworfen. Das Dosierformat wird der linearen Hubbewegung entsprechend wieder in die Beschickungsposition (Fig. 2a) gebracht und der Arbeitstakt beginnt von neuem.

Nun dient die integrierte SPS, welche sich vorzugsweise einer Simatic S7 bedient, nicht nur zur Koordination der Beschickung der Dosierkammern **6 und 7**, sondern auch zu Variation der selbigen.

Die erfindungsgemäße Vorrichtung macht es möglich, zwischen verschiedenen Volumina sehr schnell und mit minimalem Aufwand zu wechseln. Mithilfe der schon beschriebenen auswechselbaren Dosierkammern **6 und 7** kann eine standardisierte bzw. dem Innendurchmesser der Dosierkammern **6 und 7** entsprechende Volumenänderung erreicht werden. Hierzu müssen lediglich die Verbindungsbolzen **2** entfernt werden und die beiden Trägerplatten **5 und 8** können gemeinsam aus ihren Führungsschienen **16** gezogen und mit entsprechenden Dosierkammern **6 und 7** neu bestückt werden. Nun bietet diese Möglichkeit der Änderung der Volumina schon eine beachtliche Innovation gegenüber dem Stand der Technik, dennoch kann rein nur über diese Maßnahme ebenfalls nur ein begrenztes und ausschließlich von den Dosierkammern **6 und 7** abhängiges Volumen eingestellt werden.

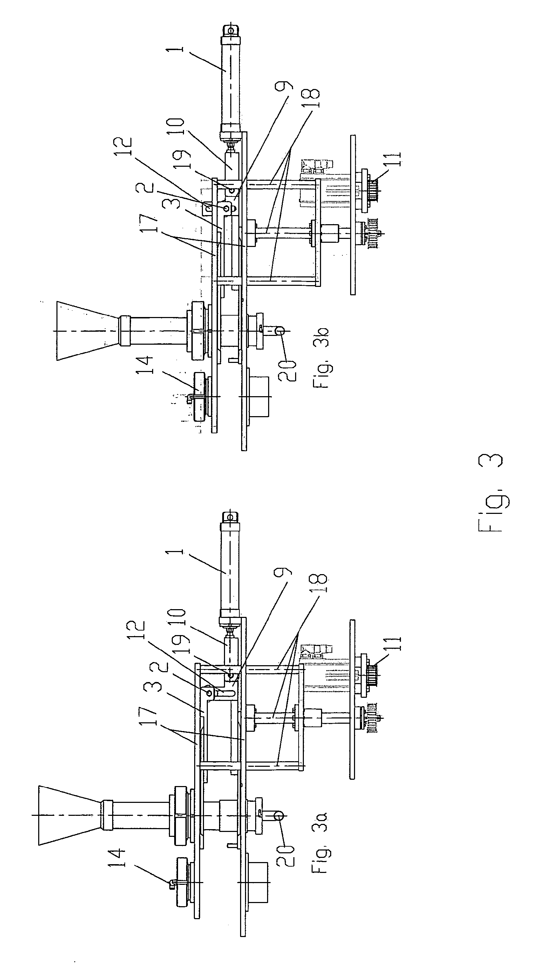

Die erfindungsgemäße Vorrichtung bietet aber überdies noch eine zusätzliche Möglichkeit, sich auf die Anforderungen der Lebensmitteldosierung und entsprechender Verpackung optimal anzupassen. Wie in Fig. 3 dargestellt, befinden sich die Führungsschienen **16** der Dosierkammern **6 und 7** auf jeweils einer Grundplatte **17**, welche durch ein Gestänge **18** höhenverstellbar ausgeführt ist. Durch diese Ausgestaltung kann der Abstand zwischen den beiden Grundplatten **17** verändert werden, und durch die Verbindung der Grundplatten **17** mit den Trägerplatten **5 und 8** des Dosiersystems wird der Abstand der Trägerplatten **5 und 8** ebenfalls veränderbar. Die Veränderung der Distanz der Trägerplatten **5 und 8** hat zur Folge, dass sich die Höhe der zylindrischen Dosierkammern **6 und 7** ebenfalls ändert und somit eine Volumenänderung der Dosierkammern **6 und 7** durch diese Maßnahme erreicht wird.

Da nun die Höhe direkt in die Berechnung des Volumens eines Zylinders einfließt, kann somit nicht nur mit dem Durchmesser der Dosierkammern **6 und 7** eine Volumenänderung herbeigeführt werden, sondern auch über die Änderung der Zylinderhöhe. Aus der daraus resultierenden Flexibilität hinsichtlich der Volumina kann das Dosierformat je nach Anwendungsgebiet und Anforderungen einfach und schnell angepasst werden.

Durch die grundsätzliche Verwendung einer SPS bietet es sich an, die Höhenverstellung ebenfalls automatisiert über die SPS steuern zu lassen. Zur Eingabe eines speziellen Volumens kann nun also der Benutzer an der Maschine eingeben, welches Volumen beschickt werden soll, und die SPS gibt dem Benutzer beispielsweise eine Meldung aus, welches Dosierkammerformat er in das Dosierformat geben muss, und stellt, nachdem dieser Austausch quittiert wurde, die Höhe der Trägerplatten **5 und 8** so ein, dass damit die Kombination aus Innendurchmesser der Dosierkammern **6 und 7** und Distanz zwischen den Trägerplatten **5 und 8** genau dem gewünschtem Volumen der Dosierkammer **6 und 7** entspricht.

Durch diese Maßnahme ist ein stufenloses Ändern der Dosierkammernvolumina möglich, und die erfindungsgemäße Vorrichtung kann jedenfalls für jedes mögliche Volumen in einem gewissen Bereich eingestellt werden. Dieser Bereich ist zwar durch die Maximaldurchmesser der Dosierkammern **6 und 7** und der Maximaldistanz des Gestänges **18** limitiert, der typische Bereich für die Dosierung von Fertiggerichten und Lebensmitteln im Allgemeinen wird damit aber jedenfalls komplett und lückenlos abgedeckt. Die vorteilhafte Ausgestaltung des stufenlos höhenverstellbaren Gestänges **18** sieht beispielsweise einen verstellbaren Bereich zwischen 55mm und 120mm vor.

Falls tatsächlich aufgrund eines Kundensonderwunsches über das übliche Volumen hinaus gearbeitet werden muss, könnte dies mit der erfindungsgemäßen Vorrichtung aber dennoch bewerkstelligt werden. Durch den einfachen Aufbau des Dosierformats müsste theoretisch nur die untere Trägerplatte **8** mit einem entsprechend längerem Langloch **12** getauscht werden und die Steuerung der Maschine an das neue Format angepasst werden. Insofern wäre theoretisch auch über das gängige Volumen hinaus eine präzise Dosierung möglich.

Zusätzlich zur Möglichkeit der Höhenverstellung mithilfe eines Servomotors **11** gibt es noch ein Handrad, mit dem im Notfall die Höhe manuell verändert werden kann.

Durch die Verwendung einer SPS in Hinblick auf die Berechnung und automatisierte Anpassung an ein bestimmtes Volumen, ergeben sich überdies noch andere sehr vorteilhafte Ausgestaltungen. Die SPS-Steuerung kann beispielsweise in Verbindung mit einer Kontrollwaage verbaut werden. Durch die ständige Rückmeldung der extern befindlichen Waage kann auf Abweichungen des Füllgewichts eingegangen werden, und durch die SPS-Steuerung und den angesteuerten Servomotor **11** kann sehr schnell und einfach das Füllgewicht nachjustiert werden, um so die bestehenden Fülltoleranzen nicht zu überstrapazieren. Diese Tendenzregelung kann vollautomatisch und sehr schnell erfolgen, sodass sich der Anwender über die Einhaltung entsprechender Betriebstoleranzen keine Sorgen machen muss, da diese automatisch von der Steuerung übernommen werden.

Grundsätzlich gilt für die erfindungsgemäße Vorrichtung, dass in lebensmittelverarbeitenden Betrieben mindestens einmal täglich, bzw. bei einer Änderung des Dosiermediums auch entsprechend öfter, eine Reinigung bzw. Wartung der Vorrichtung durchgeführt wird und in der erfindungsgemäßen Vorrichtung auf die einfache Zerlegbarkeit und einfache Reinigung der Komponenten geachtet wurde. Alle Verbindungen können einfach gelöst und wieder verbunden werden, und die Verwendung von Klein- und Kleinstteilen wurde minimiert. Die vorteilhafte Ausgestaltung verringert zudem die Wartungszeiten und die Standzeit der Gesamtanlage im Fehlerfall, da nicht mit Spezialwerkzeug hantiert werden muss und die einzelnen Funktionsgruppen der Anlage durch den Anwender im Fehlerfall sehr einfach zu identifizieren sind.

Natürlich muss während des Betriebes der erfindungsgemäßen Vorrichtung gewährleistet sein, dass der Anwender nicht direkt mit den beweglichen Teilen des Dosiersystems in Berührung kommen kann. Bei einem Reinigungs- bzw Wartungsvorgang kann beispielsweise die Vorrichtung durch die SPS-Steuerung so blockiert werden, dass zwar eine Reinigung und Wartung ohne Probleme möglich ist, ein Wiedereintreten der Maschine in den Normalbetrieb allerdings vom Benutzer separat quittiert werden muss.

### Bezugszeichenliste:

1) Antriebszylinder
2) Verbindungsbolzen
3) Führungsgabel oben
4) Distanzscheibe oben
5) Trägerplatte oben
6) Dosierkammer oben
7) Dosierkammer unten
8) Trägerplatte unten
9) Gabelkopfgestänge
10) Gabelkopf
11) Servomotor
12) Langloch
13) Gummidichtung
14) Luftdichter Überdruckluftanschluss
15) Sieb
16) Führungsschiene
17) Grundplatte
18) Gestänge
19) Bolzen
20) Luftdichter Unterdruckanschluss

## Patentansprüche

1. Vorrichtung zum Dosierung von heterogenen, empfindlichen und nicht pumpfähigen Lebensmitteln mit geringem Flüssigkeitsanteil beinhaltend zumindest:
- einen Antriebszylinder (1), welcher das Dosiersystem mit einer Schwingbewegung beaufschlagt,
**dadurch gekennzeichnet, dass** die Vorrichtung beinhaltet:
- einen oder mehrere Verbindungsbolzen (2), die zwischen einer Gabelkopfgestänge (9) und einer oberen Führungsgabel (3), welche ein vertikales Langloch (12) aufweist, eine formschlüssige, aber dennoch höhenvariable Verbindung entlang des vertikalen Langlochs (12) darstellen,
- zwei oder mehrere Trägerplatten (5 und 8), welche zentrierte Ausnehmungen beinhalten, in denen auswechselbare, ineinander steckbare Dosierkammern (6 und 7) angebracht werden können, wobei das Gabelkopfgestänge (9) und die obere Führungsgabel (3) jeweils an einer der Trägerplatten (5 und 8) fixiert sind und so eine mechanische Verbindung zum Antriebszylinder (1) herstellen,
- ein oder mehrere vertikale Gestänge (18), welche entweder durch eine entsprechende Handschraube oder durch einen Antrieb (11) die Distanz zwischen den Trägerplatten (5 und 8) verändern können,
- einen steuerbaren luftdichten Unterdruckanschluss (20), der im Bereich der Dosierkammern (6 und 7) die Lebensmittel mittels Unterdruckbeaufschlagung im Bereich der Beschickung in die Dosierkammern (6 und 7) befördert,
- einen steuerbaren luftdichten Überdruckanschluss (14), der im Bereich der der Dosierkammern (6 und 7) die Lebensmittel mittels Überdruckbeaufschlagung im Bereich des Auswurfs aus den Dosierkammern (6 und 7) befördert.

2. Vorrichtung nach Anspruch 1, **dadurch gekennzeichnet, dass** der Antriebszylinder (1) die Vorrichtung mit einer geradlinigen Hubbewegung beaufschlagt.

3. Vorrichtung nach einem der Ansprüche 1 und 2, **dadurch gekennzeichnet, dass** die Trägerplatten (5 und 8) durch entsprechende Führungsschienen (16) der Grundplatte (17) geführt werden.

4. Vorrichtung nach einem der Ansprüche 1 bis 3, **dadurch gekennzeichnet, dass** die beiden Trägerplatten (5 und 8) so ausgeführt sind, dass sie den austauschbaren Dosierkammern (6 und 7) entsprechend Platz bieten und so ausgestaltet sind, dass an der oberen Trägerplatte (5) durch eine Distanzscheibe (4) eine Gleitverbindung mit den Führungsschienen (16) der Grundplatte (17) hergestellt wird.

5. Vorrichtung nach einem der Ansprüche 1 bis 4, **dadurch gekennzeichnet, dass** die auswechselbaren Dosierkammern (6 und 7) so ausgestaltet sind, dass sie eine wasser- und luftdichte Verbindung (13) aufweisen und aus einem robusten und leicht zu reinigendem Material ausgeführt sind.

6. Vorrichtung nach einem der Ansprüche 1 bis 5, **dadurch gekennzeichnet, dass** die Änderung der Distanz zwischen den Trägerplatten (5 und 8) automatisch mittels eines entsprechenden Antriebs (11) vonstatten geht.

7. Vorrichtung nach einem der Ansprüche 1 bis 6, **dadurch gekennzeichnet, dass** die Steuerung der Änderung der Distanz der Trägerplatten (5 und 8) vorzugsweise mittels einer speicherprogrammierbaren Steuerung (SPS) gesteuert wird.

8. Vorrichtung nach einem der Ansprüche 1 bis 7, **dadurch gekennzeichnet, dass** für die Distanzänderung der Trägerplatten (5 und 8) ein Handrad zur manuellen Änderung der Distanz ausgeführt ist, welches im Notfall verwendet werden kann.

## Claims

1. A device for metering heterogeneous, sensitive and non-pumpable food comprising a low liquid portion including at least:
- a drive cylinder (1), which impacts the metering system with an oscillation movement,
**characterized in that** the device includes:
- one or a plurality of connecting bolts (2), which represent a positive, yet height-variable connection along the vertical elongated hole (12) between fork head rods (9) and an upper guide fork (3), which encompasses a vertical elongated hole (12),
- two or more support plates (5 and 8), which include centered recesses, in which replaceable metering chambers (6 and 7), which can be inserted into one another, can be attached, wherein the fork head rods (9) and the upper guide fork (3) are in each case fixed to one of the support plates (5 and 8) and thus establish a mechanical connection to the drive cylinder (1),
- one or more vertical rods (18), which can change the distance between the support plates (5 and 8), either by means of a corresponding hand screw or by means of a drive (11),
- a controllable air-tight low pressure connection (20), which, in the area of the metering chambers (6 and 7), conveys the food into the area of the charging of the metering chambers (6 and 7) by means of low pressure application,
- a controllable air-tight over pressure connection (14), which, in the area of the metering chambers (6 and 7), conveys the food out of the metering chambers (6 and 7) by means of overpressure application in the area of the expulsion.

2. The device according to claim 1, **characterized in that** the drive cylinder (1) applies a rectilinear lifting movement to the device.

3. The device according to one of claims 1 and 2, **characterized in that** the support plates (5 and 8) are guided by means of corresponding guide rails (16) of the base plate (17).

4. The device according to one of claims 1 to 3, **characterized in that** the two support plates (5 and 8) are embodied such that they provide corresponding space to the replaceable metering chambers (6 and 7) and are embodied such that a sliding connection to the guide rails (16) of the base plate (17) is established at the upper support plate (5) by means of a distancing disk (4).

5. The device according to one of claims 1 to 4, **characterized in that** the replaceable metering chambers (6 and 7) are embodied such that they encompass a water and air-tight connection (13) and are embodied from a robust and easily cleanable material.

6. The device according to one of claims 1 to 5, **characterized in that** the change to the distance between the support plates (5 and 8) takes place automatically by means of a corresponding drive (11).

7. The device according to one of claims 1 to 6, **characterized in that** the control of the change to the distance of the support plates (5 and 8) is preferably controlled by means of a memory-programmable controller (SPS).

8. The device according to one of claims 1 to 7, **characterized in that** a hand wheel, which can be used in case of emergency, for manually changing the distance, is embodied for changing the distance of the support plates (5 and 8).

## Revendications

1. Dispositif destiné à doser des produits alimentaires hétérogènes, sensibles et non pompables, à faible proportion de liquide, contenant au moins :
- un cylindre d'entraînement (1) qui soumet le système de dosage à un mouvement vibratoire,
**caractérisé en ce que** le dispositif comprend :
- un ou plusieurs boulons d'assemblage (2) qui entre une tringle à tête de fourche (9) et une fourche de guidage (3) supérieure, laquelle comporte un trou oblong (12) vertical représentent un assemblage par complémentarité de forme, mais toutefois à hauteur variable le long du trou oblong (12) vertical,
- deux ou plusieurs plaques porteuses (5 et 6) lesquelles comprennent des évidements centrés dans lesquels on peut monter des compartiments de dosage (6 et 7) interchangeables, emboîtables les uns dans les autres, la tringle à tête de fourche (9) et la fourche de guidage (3) supérieure étant chacune fixée sur l'une des plaques porteuses (5 et 8) et réalisant ainsi un assemblage mécanique sur le cylindre d'entraînement (1),
- une ou plusieurs tringles (18) verticales, qui soit par une molette correspondante ou par un entraînement (11) sont aptes à modifier la distance entre les plaques porteuses (5 et 8),
- un raccord à dépression (20) pilotable, étanche à l'air, qui dans la zone des compartiments de dosage (6 et 7) transporte les produits alimentaires en les soumettant à une dépression dans la zone du chargement dans les compartiments de dosage (6 et 7),
- un raccord à surpression (14) pilotable, étanche à l'air, qui dans la zone des compartiments de dosage (6 et 7) transporte les produits alimentaires en les soumettant à une surpression dans la zone d'éjection hors des compartiments de dosage (6 et 7).

2. Dispositif selon la revendication 1, **caractérisé en ce que** le cylindre d'entraînement (1) soumet le dispositif à une course rectiligne.

3. Dispositif selon l'une quelconque des revendications 1 et 2, **caractérisé en ce que** les plaques porteuses (5 et 8) sont guidées par des coulisses de guidage (16) correspondantes de la plaque d'assise (17).

4. Dispositif selon l'une quelconque des revendications 1 à 3, **caractérisé en ce que** les deux plaques porteuses (5 et 8) sont réalisées de sorte à offrir une place correspondante aux compartiments de dosage (6 et 7) interchangeables et sont conçues de sorte à réaliser sur la plaque porteuse (5) supérieure à l'aide d'une rondelle d'écartement (4) un assemblage par glissement avec les coulisses de guidage (16) de la plaque d'assise (17).

5. Dispositif selon l'une quelconque des revendications 1 à 4, **caractérisé en ce que** les compartiments de dosage (6 et 7) sont conçus de sorte à ce qu'ils comportent un assemblage (13) étanche à l'eau et à l'air et sont réalisés en une matière robuste et facile à nettoyer.

6. Dispositif selon l'une quelconque des revendications 1 à 5, **caractérisé en ce que** la modification de la distance entre les plaques porteuses (5 et 6) se déroule automatiquement au moyen d'un entraînement (11) correspondant.

7. Dispositif selon l'une quelconque des revendications 1 à 6, **caractérisé en ce que** le pilotage de la modification de la distance entre les plaques porteuses (5 et 8) est piloté de préférence au moyen d'une commande par programme enregistré (CPE).

8. Dispositif selon l'une quelconque des revendications 1 à 7, **caractérisé en ce que** pour la modification de la distance entre les plaques porteuses (5 et 8), un volant, lequel peut être utilisé en cas d'urgence est réalisé pour la modification manuelle de la distance.
